Europäisches Patentamt

European Patent Office

Office européen des brevets

(11) Numéro de publication: **0 242 251**
**B1**

(12) **FASCICULE DE BREVET EUROPEEN**

(45) Date de publication du fascicule du brevet:
16.05.90

(21) Numéro de dépôt: 87400603.4

(22) Date de dépôt: 18.03.87

(51) Int. Cl.⁵: **C22C 19/05, G21C 13/08**

(54) **Organe de structure en alliage austénitique nickel-chrome-fer.**

(30) Priorité: 18.03.86 FR 8603832

(43) Date de publication de la demande:
21.10.87 Bulletin 87/43

(45) Mention de la délivrance du brevet:
16.05.90 Bulletin 90/20

(84) Etats contractants désignés:
**BE DE ES GB IT SE**

(56) Documents cités:
EP-A- 0 091 279
BE-A- 806 063
FR-A- 649 575
FR-A- 1 556 954
GB-A- 698 299

(73) Titulaire: **ELECTRICITE DE FRANCE Service National, 2, rue Louis Murat, F-75008 Paris(FR)**

(72) Inventeur: **Donati, Jean-Roger, 24, rue des Montforts, F-77819 Thomery(FR)**
Inventeur: **Rouillon, Yves, 107 Avenue de Nemours, F-77210 Avon(FR)**
Inventeur: **Saint Paul, Pierre, 60 rue de Courbuisson, F-77920 Samois sur Seine(FR)**
Inventeur: **Zacharie, Guy, 6 rue Dancourt, F-77300 Fontainebleau(FR)**
Inventeur:
L'autre inventeur a renoncé à sa désignation

(74) Mandataire: **Fort, Jacques et al, CABINET PLASSERAUD 84, rue d'Amsterdam, F-75009 Paris(FR)**

## Description

La présente invention concerne les organes de structure en contact avec de l'eau à haute température et haute pression dans un réacteur nucléaire, du type constitué en alliage inoxydable austénitique à base de nickel contenant en poids 5 à 10% de fer.

L'invention trouve une application particulièrement importante dans la constitution d'organes de structure en contact avec un milieu aqueux à haute température, typiquement de 200 à 360°.

On a proposé depuis très longtemps d'utiliser les alliages austénitiques fer-chrome-nickel dans des milieux aqueux à haute température, en particulier pour constituer des organes en contact avec l'eau et la vapeur des circuits primaire et secondaire des réacteurs à eau légère sous pression.

Pour certains de ces alliages, on dispose d'une expérience d'emploi de durée suffisante pour que leurs propriétés soient bien connues. En particulier, on a utilisé les alliages dits "INCONEL® 600" pour constituer les tubes des générateurs de vapeur des réacteurs à eau sous pression, tubes qui sont en contact sur une face avec l'eau déminéralisée en phases liquide et vapeur du circuit secondaire, sur l'autre face, avec l'eau, pouvant contenir du lithium et du bore, du circuit primaire. On utilise également très largement les alliages INCONEL® X750 pour constituer les broches de fixation des tubes guides de grappes de contrôle sur la plaque supérieure de coeur, tubes qui appartiennent aux internes supérieurs des réacteurs.

Le Tableau I ci-dessous donne la composition de ces alliages.

TABLEAU I

| | C | S | P | Mn | Si | Ni | Cr | Fe | Co | Ti | Cu | Al | Nb |
|---|---|---|---|---|---|---|---|---|---|---|---|---|---|
| INCONEL 600 | <0,050 | ≤0,015 | ≤0,015 | <1,00 | <0,50 | >72,00 | 14,00—17,00 | 6,00—10,00 | <0,10 | — | <0,50 | — | — |
| INCONEL 690 | 0,010 0,040 | ≤0,015 | ≤0,015 | ≤0,50 | ≤0,50 | ≥58,00 | 28,00—31,00 | 7,00—10,00 | <0,10 | ≤0,50 | ≤0,50 | ≤0,50 | — |
| INCONEL X750 | ≤0,080 | ≤0,010 | — | ≤1,00 | ≤0,50 | ≥70,00 | 14,00—17,00 | 5,00—9,00 | ≤0,20 | 2,25 2,75 | ≤0,50 | 0,40 1,00 | 0,70 1,20 |

L'expérience a permis de mettre au point sur ces alliages des techniques de construction et de soudage écartant les incertitudes et d'acquérir des connaissances sur leur tenue à long terme. Mais il est apparu que les alliages INCONEL® 600 et X750 sont sensibles à un phénomène de corrosion sous contrainte dans l'eau pure et dans le réfrigérant primaire des réacteurs à eau légère lorsque les contraintes mécaniques subies par les organes qu'ils constituent sont importantes. Ce phénomène est l'un de ceux qui limitent la durée de vie des organes de structure soumis à des contraintes et constitués en ces matériaux dans les réacteurs.

On a également proposé, dans le but de réduire la corrosion généralisée, des alliages à teneur en nickel beaucoup plus faible que celle des alliages ci-dessus et à teneur en chrome beaucoup plus élevée. Parmi ces alliages, on peut notamment citer les alliages INCONEL® 690, dont la composition est également donnée dans le tableau I, qui contiennent 28 à 31 % de chrome et dont la teneur en nickel peut descendre jusqu'à 58 %.

Ces nouveaux matériaux présentent des propriétés mécaniques et physiques notablement différentes des alliages déjà largement utilisés ; d'une part, ils nécessitent de développer de nouvelles méthodes de construction compatibles avec eux ; d'autre part, ils font naître des incertitudes en ce qui concerne leur tenue à long terme.

Le document EP-A-91 279 décrit un traitement applicable à un alliage classique INCONEL® X750 pour améliorer sa résistance à la corrosion et donne un seul exemple, dans lequel les teneurs des composants sont celles du tableau ci-desssus. Les revendications de ce document élargissent la teneur en chrome prévue, de façon complètement spéculative, à la plage comprise entre 14 et 25 %.

La présente invention vise à fournir des organes de structure en alliage conservant pour l'essentiel les propriétés physiques et mécaniques d'alliages largement expérimentés, mais ayant une résistance à la corrosion sous contrainte dans l'eau pure et dans le milieu primaire des réacteurs à eau sous pression qui est nettement supérieure à celle de ces alliages éprouvés, même lorsque ces derniers ont subi le traitement thermique qui leur donne la meilleure résistance à la corrosion sous contrainte.

Pour cela, l'invention part de la constatation, faite par les inventeurs, que les aciers fer-chrome contenant du nickel et les alliages nickel-chrome, contenant du fer, deviennent pratiquement insensibles à la corrosion sous contrainte dans l'eau pure, les milieux basiques dilués et les milieux primaires des réacteurs à eau légère lorsqu'ils contiennent plus de 18% de chrome. Les observations qui ont pu être faites de corrosion d'aciers à 18% de chrome et 10 % de nickel semblent dues au fait que ces aciers étaient sensibilisés, c'est-à-dire que leur teneur en chrome aux joints de grains était nettement inférieure à 18 %.

L'invention propose en conséquence un organe de structure du type ci-dessus défini, contenant 5 à 10% de fer, caractérisé en ce qu'il comprend comprend également 18 à 20% de chrome et plus de 70% en poids de nickel, la somme des teneurs en fer, chrome et nickel représentant moins de 100 % en poids de l'alliage.

La teneur de ces alliages en fer et nickel restant dans les plages caractéristiques des alliages bien connus, et les teneurs en éléments d'addition pouvant également être choisis dans ces mêmes limites, les propriétés métallurgiques sont très peu modifiées. Par contre l'augmentation de la teneur en chrome, bien que faible comparée à celle qui conduit à passer des alliages INCONEL® 600 aux alliages INCONEL® 690, améliore très considérablement la résistance à la corrosion sous contrainte dans les milieux aqueux.

Il est particulièrement avantageux de choisir pour les alliages, et en fonction de l'application envisagée pour eux, des compositions qui ne se différencient de celles des alliages INCONEL® 600 et X750 que par l'augmentation de la teneur en chrome, tous les autres composants étant présents à une teneur qui reste dans les plages prévues pour ces alliages.

Lorsque l'alliage est destiné à être en contact avec tout à la fois le milieu primaire d'un réacteur à eau sous pression et l'eau déminéralisée du circuit secondaire d'un tel réacteur, en phases liquide et vapeur, on utilisera avantageusement un dérivé des alliages INCONEL® 600, contenant plus de 6% de fer. Dans ce cas, les éléments présents à une teneur appréciable dans l'alliage, en plus du chrome, du nickel et du fer, se limitent au carbone, au silicium, au titane, au manganèse et à l'aluminium. Par contre, les teneurs en soufre et en phosphore doivent rester très faibles, inférieures à 0,03% au total.

Dans le cas où l'alliage est prévu pour constituer des pièces de structure dans un milieu aqueux à haute température, en contact avec de l'eau à haute température susceptible de contenir de l'oxygène, il est souhaitable que la teneur en chrome soit d'au moins 18,5% afin que la teneur en chrome au niveau des joints de grains reste de l'ordre de 18% et qu'on évite le phénomème de sensibilisation.

Pratiquement, il est dans la plupart des cas préférable de limiter la teneur en chrome à 19,5%; souvent une teneur de 19% en chrome sera proche de l'optimum.

Les alliages de ce type se rapprochent, pour ce qui est de l'ensemble de leurs caractéristiques physiques et chimiques, des alliages INCONEL® 600 mais présentent une résistance très accrue à la corrosion sous contrainte. Il est particulièrement avantageux de choisir un alliage qui est à limite élastique d'au moins 700 MPa et dont les teneurs des différents constituants de l'alliage sont, sauf pour le chrome, dans les plages de valeurs correspondant aux alliages INCONEL®X750.

Pour un organe de structure uniquement en contact avec le réfrigérant primaire d'un réacteur à eau sous pression il est avantageux que l'alliage contienne en plus, du nickel, du chrome et une teneur en fer ne dépassant pas 9% du manganèse, du titane, de l'aluminium et du niobium, les teneurs en soufre et phosphore restant de l'ordre du ppm.

Pour réaliser des organes de structure soumis à des contraintes élevées dans un milieu aqueux à haute température par exemple entre 220 et 230°C, tels que le réfrigérant primaire d'un réacteur à eau sous pression, il est avantageux d'utiliser un alliage détivé des alliages INCONEL®X750, contenant, (en plus du nickel, du chrome et du fer) du manganèse, du titane, de l'aluminium et du niobium.

La présence de l'aluminium, du niobium et surtout du titane à une teneur de 2,25 à 2,75%, augmente notablement la limite élastique pour une température de traitement thermique qui peut varier dans de larges limites.

Les teneurs en soufre et en phosphore doivent rester très faibles, de l'ordre du ppm. Les teneurs en titane, aluminium et niobium seront avantageusement dans celles prévues pour les alliages INCONEL®X750, de façon à apporter très peu de changement aux propriétés métallurgiques et à la tenue à long terme.

On donnera maintenant quelques exemples d'alliages conformes à l'invention, dérivrés des alliages INCONEL®600 et X750; ces alliages seront désignés par 600A, 600B et X750A. Leurs compositions sont données dans le tableau II ci-après.

TABLEAU II

| | C | S | P | SI | Mn | Ni | Cr | Fe | Co | Ti | Cu | Al | Nb |
|---|---|---|---|---|---|---|---|---|---|---|---|---|---|
| 600 A | 0,021 | 0,006 | 0,006 | 0,31 | 0,74 | 72,24 | 19,13 | 7,28 | 0,07 | 0,22 | 0,01 | 0,18 | – |
| 600 B | 0,038 | 0,001 | 0,009 | 0,26 | 0,77 | 72,04 | 19,23 | 7,14 | – | 0,23 | – | 0,13 | – |
| X 750 A | 0,064 | 0,003 | 0,004 | 0,32 | 0,21 | 70,42 | 18,78 | 6,06 | <0,01 | 2,53 | <0,005 | 0,69 | 0,90 |

Ces alliages ont été soumis après traitement thermique à des essais comparatifs qui ont donné les résultats suivants.

Exemple 1 : Alliage 600A

Plusieurs éprouvettes du type "selle de cheval" ont été préparées à partir d'une même coulée par formage de tubes de 22 mm de diamètre et 1,27 mm d'épaisseur, découpe des tubes et formage. Elles ont été soumises à un traitement thermique de fin de fabrication, consistant en un passage au four au défilé à 980°C (traitement 1) ou à 1010°C (traitement 2).

La comparaison a été faite avec des éprouvettes en alliage INCONEL® 600 non traitées et des éprouvettes traitées thermiquement à 700°C.

La corosion sous contrainte a été comparée dans deux milieux :

Milieu 1 : eau contenant 2 ppm Li (LiOH), 1000 ppm B (H3BO3) et 25 ml de TPN d'hydrogène à 360°C ;
Milieu 2 : eau contenant 2 ppm Li (LiOH), 1000 ppm B (H3BO3) et 3 bar d'hydrogène (mesuré à chaud) à 360°C.

L'alliage INCONEL® 600 non traité thermiquement fissure dans les milieux 1 et 2 en moins de 3000 h, la plupart du temps en moins de 1000 h ; l'alliage INCONEL® 600 traité thermiquement à 700°c fissure souvent en moins de 4000 h.

Au contraire, l'alliage 600A a donné les résultats suivants :

Milieu 1 : absence de corrosion avec traitement 1 après 3100 h et avec traitement 2 après 2100 h ;
Milieu 2 : absence de corrosion avec traitement 1 après 8700 h et avec traitement 2 après 4100 h.

Exemple 2 : Alliage X750A

Etant donné qu'il s'agit d'un alliage de boulonnerie, les éprouvettes utilisées ont été des éprouvettes cylindriques de traction soumises au traitement thermique suivant :
- homogénéisation de 24 h à 885°C,
- durcissement par paliers : 730°C 8 h
+620°C 8 h.

Les essais comparatifs, sous une contrainte mécanique de 900 MPa, ont été effectués dans l'eau pure contenant 25 à 50 ml de TPN d'hydrogène à 350°C.

Dans ces conditions, l'alliage INCONEL® X750 traité à 885°C suivi d'un traitement de durcissement par paliers fissure en moins de 140 h ; le même alliage traité à 1093°C pendant une heure, puis soumis à un durcissement à 704°C durant 20 h (ce qui est le traitement actuellement recommandé), se fissure en moins de 830 h.

Au contraire, après 500 heures, l'alliage INCONEL® X750 A, après le traitement thermique de durcissement qui confère, à l'alliage INCONEL® X750 classique, la plus mauvaise tenue à la corrosion parmi ceux antérieurement utilisés industriellement, n'a pas fissuré.

De façon générale, l'invention fournit des alliages qui, tout à la fois, sont très proches d'alliages bien connus et éprouvés, mais sont capables de résister à la fissuration lorsqu'ils sont soumis à chaud à de très fortes contraintes mécaniques, dans des milieux chimiques tels que l'eau, les milieux primaires et secondaires des réacteurs nucléaires à eau, et les milieux basiques dilués.

Entre autres applications, on peut donc citer les broches de fixation de tubes guides de grappes de contrôle, les tubes de générateurs de vapeur, et plus généralement les appareils soumis à des contraintes mécaniques de tension, nécessitant l'utilisation d'alliages base nickel et fonctionnant dans des milieux aqueux à haute température, typiquement de 220 à 360°C.

**Revendications**

1. Organe de structure en contact avec de l'eau à haute température et haute pression dans un réacteur nucléaire, du type constitué en alliage inoxydable austénitique à base de nickel contenant en poids 5 à 10% de fer, caractérisé en ce qu'il comprend également 18 à 20% de chrome et plus de 70% en poids de nickel, la somme des teneurs en fer, chrome et nickel représentant moins de 100% en poids de l'alliage.

2. Organe de structure selon la revendication 1, caractérisé en ce que la teneur en chrome est inférieure à 19,5 %.

3. Organe de structure selon la revendication 2, caractérisé en ce que la teneur en chrome est d'environ 19%.

4. Organe de structure selon la revendication 1, 2 ou 3, en contact avec de l'eau à haute température susceptible de contenir de l'oxygène, caractérisé en ce que la teneur en chrome est d'au moins 18,5%.

5. Organe de structure selon la revendication 1, 2 ou 3, caractérisé en ce que les teneurs des différents constituants de l'alliage sont, sauf pour le chrome, dans les plages de valeurs correspondant aux alliages INCONEL®600.

6. Organe de structure selon la revendication 1 ou 2, caractérisé en ce que l'alliage est à limite élastique d'au moins moins 700 MPa et en ce que les teneurs des différents constituants de l'alliage sont, sauf pour le chrome, dans les plages de valeur correspondant aux alliages INCONEL®X750.

7. Organe de structure uniquement en contact avec le réfrigérant primaire d'un réacteur à eau sous pression selon la revendication 1 ou 2, caractérisé en ce que l'alliage contient, en plus du nickel, du chrome et d'une teneur en fer ne dépassant pas 9%, du manganèse, du titane, de l'aluminium et du niobium, les teneurs en soufre et phosphore restant de l'ordre du ppm.

8. Application de l'organe de structure selon la revendication 1 ou 2 à la constitution d'éléments de structure soumis à contrainte élevée dans un milieu aqueux à température comprise entre 220 et 330°C.

9. Application de l'organe de structure, selon la revendication 4 au contact avec tout à la fois le milieu primaire d'un réacteur à eau sous pression et l'eau déminéralisée du circuit secondaire d'un tel réacteur, en phases liquide et vapeur.

## Claims

1. Structural element in contact with high temperature high pressure water in a nuclear reactor, of the type constituted of nickel base austenitic stainless alloy containing 5–10% of iron by weight, characterized in that it further comprises 18–20% of chromium and more than 70% of nickel by weight, the sum of the iron, chromium and nickel contents representing less than 100% by weight of the alloy.

2. Structural element according to claim 1, characterized in that the chromium content is less than 19.5%.

3. Structural element according to claim 2, characterized in that the chromium content is of about 19%.

4. Structural element according to claim 1, 2 or 3, in contact with high temperature water possibly containing oxygen, characterized in that the chromium content is at least of 18.5%.

5. Structural element according to claim 1, 2 or 3, characterized in that the contents of the different constituents of the alloy are, except for chromium, in the ranges of values corresponding to the INCONEL 600 alloys.

6. Structural element according to claim 1 or 2, characterized in that the alloy has a resilient limit of at least 700 MPa and in that the contents of the different constituents of the alloy are, except for chromium, in the ranges of values corresponding to the INCONEL X750 alloys.

7. Structural element which is only in contact with the primary coolant of a pressurized water reactor, according to claim 1 or 2, characterized in that the alloy contains, in addition to nickel, chromium and an iron content which does not exceed 9%, manganese, titanium, aluminium and niobium, the proportions of sulphur and phosphorus being of about 1 ppm.

8. Application of the structural element according to claim 1 or 2 to the constitution of structural members subjected to high stresses in an aqueous medium at a temperature of from 220 to 330°C.

9. Application of the structural element according to claim 4, in simultaneous contact with the primary medium of a pressurized water reactor and with the demineralized water of the secondary circuit of such a reactor, in liquid and steam phases.

## Patentansprüche

1. In Kontakt mit Wasser stehendes Bauelement bei hoher Temperatur und unter hohem Druck in einem Nuklearreaktor aus einer nicht rostenden austentischen Legierung auf Nickelbasis mit einem Gehalt an Eisen von 5 bis 10 Gew.-%, dadurch gekennzeichnet, daß es ebenfalls 18 bis 20 Gew.-% Chrom und mehr als 70 Gew.-% Nickel aufweist, wobei die Summe der Anteile an Eisen, Chrom und Nickel weniger als 100 Gew.-% der Legierung ausmacht.

2. Bauelement nach Anspruch 1, dadurch gekennzeichnet, daß der Anteil an Chrom kleiner als 19,5 Gew.-% ist.

3. Bauelement nach Anspruch 2, dadurch gekennzeichnet, daß der Gehalt an Chrom ungefähr 19 Gew.-% ist.

4. Bauelement nach Anspruch 1, 2 oder 3 in Kontakt mit Wasser bei hoher Temperatur, die einen Gehalt an Sauerstoff bedingen kann, dadurch gekennzeichnet, daß der Anteil an Chrom wenigstens 18,5 Gew.-% beträgt.

5. Bauelement nach Anspruch 1, 2 oder 3, dadurch gekennzeichnet, daß die Anteile der verschiedenen Bestandteile der Legierung mit Ausnahme von Chrom im Rahmen der Werte der Legierungen INCONEL 600 liegen.

6. Bauelement nach Anspruch 1 oder 2, dadurch gekennzeichnet, daß die Legierung eine Elastizitätsgrenze von wenigstens 700 MPa aufweist, und daß die Anteile der Bestandteile der Legierung mit Ausnahme von Chrom im Bereich der Werte der Legierungen INCONEL X750 liegen.

7. Bauelement nach Anspruch 1 oder 2, das in Kontakt mit lediglich dem primären Kühlmittel eines Reaktors ist, dadurch gekennzeichnet, daß die Legierung zusätzlich zu Nickel, Chrom und einem Anteil an Eisen nicht über 9 Gew.-% Mangan, Titan, Aluminium und Niobium aufweist, wobei die Anteile an Schwefel und Phosphor im ppm-Bereich bleiben.

8. Verwendung eines Bauelementes nach Anspruch 1 oder 2 zur Bildung von Bauelementen, die einer erhöhten Beanspruchung in einem wässrigen Medium mit einer Temperatur zwischen 220° und 330°C unterzogen sind.

9. Verwendung eines Bauelements nach Anspruch 4 zum gleichzeitigen Kontakt mit dem primären Medium eines Druckwasserreaktors und mit dem demineralisierten Wasser des sekundären Kreislaufes eines derartigen Reaktors in flüssiger und dampfförmiger Phase.